# EUROPÄISCHE PATENTANMELDUNG

(11) **EP 1 469 438 A2**
(43) Veröffentlichungstag der Anmeldung: **20.10.2004**
(21) Anmeldenummer: 04005519.6
(22) Anmeldetag: 09.03.2004
(51) Int. Cl.: G08C 15/00, G01B 7/00, G01B 7/30

(54) **Messwertverarbeitung von Winkel- und Wegmesssystemen**

(30) Priorität: 16.04.2003 DE 10317803
(71) Anmelder: Rodi, Anton, 69181 Leimen (DE)
(72) Erfinder: Rodi, Anton, 69181 Leimen (DE)

(57) **Zusammenfassung**

Es wird eine Messwertverarbeitung von Winkel- und Wegmesssystemen beschrieben. Die im Messgeber gebildeten Absolutwerte werden über eine serielle Datenausgabe permanent an eine nicht zum Messgeber gehörende Empfangseinrichtung übertragen, dort zwischengespeichert und der Steuerung folgerichtig ausgegeben.

Damit erreicht man vorteilhaft schnelle Datenübertragung vom Messgeber zur Steuerung.

## Beschreibung

Zunehmend lösen absolutmessende Winkel- und Wegmesssysteme die bisherigen Inkremental-Geberausführungen mit z. B. 90° versetzten A-/B- bzw. Sin-/Cos-Signalen ab. Die Absolutwerte werden insbesondere für hohe Auflösungen zweckmäßigerweise über serielle Datenübertragung realisiert, da sich die Halbleiter-Anschlüsse samt Kabel- und Steckeraufwendungen reduziert und kostengünstig gestaltet. Der Wunsch nach höheren Winkel-Wegstrecken-Auflösungen und zunehmender Verarbeitungsgeschwindigkeit für Verstelleinrichtungen bei industriellen Geräten, Maschinen und Anlagen, stellt hohe Herausforderungen an die Messsignalverarbeitung und Messdatenübermittlung.

Die Automatisierungstechnik führt zudem zu verstärktem Einsatz von verteilten Steuerungen mit einer Vielzahl von Sensoren und Aktuatoren, deren informationstechnische Verknüpfung vermehrt über komplexe BUS-Systeme bedarfsgerecht im Produktionsprozess vorgenommen werden.

Absolute Winkel- und Wegmesssysteme mit hoher Auflösung und Verarbeitungsgeschwindigkeit sind z. B. in den Anmeldungen EP 110203A1 bzw. DE 10123292 A1 beschrieben, auf deren Inhalte ausdrücklich Bezug genommen wird. Mit den dort ausgeführten Messsystemen sind hohe Messdatenübertragungen, z. B. über die erläuterte SSI-Schnittstelle, zu gewährleisten. Zudem können zu definiert gewünschten Zeitpunkten von der Steuerung die Messdaten praktisch ohne Zeitverzug innerhalb der Messverarbeitungszeit von einigen 10 nsec angefragt und über Taktfrequenzen übertragen werden. Damit sind dann auch mehrere Messgeber zu gleichem Zeitpunkt von der übergeordneten Steuerung abfragbar und die Messwerte erlauben eine Synchronisation von z. B. Mehrachsantrieben innerhalb der Messverarbeitungszeit mit einem maximalen "Jitter" von einigen 10 nsec. Will man mit BUS-Systemen die punktgenaue Abfrage und Synchronisation realisieren, so scheitert das an kopflastigen Übertragungsprotokollen, die auch bei höchsten Übertragungsfrequenzen derzeit Zykluszeiten von ca. 1 msec benötigen.

Auch die ereignisgesteuerte Abfrage der Messgeber-Absolutwerte durch die Steuerung ist über die serielle Schnittstelle nicht für alle Zwecke der Regelung von z. B. hochdynamischen Servoantrieben ohne weiteres geeignet. Z. B. werden für die permanente elektronische Kommutierung von Elektromotoren entweder separate Hall-Sensoren zur Erfassung der hierzu benötigten Winkelinformation des Rotors herangezogen, oder es werden Inkrementalsignale -A-/B-Signale oder Sin-/Cos-Signale - vom Messgeber dazu verwendet. Auch bei absolutmessenden Winkel- und Wegmesssystemen, bei denen der Gesamtabsolutwert im Geber selbst gebildet und seriell zur Steuerung übertragen wird, werden diese separaten Maßnahmen mit Aufwand an Bauteilen, Stecker und Kabel zur elektronischen Kommutierung zusätzlich getroffen.

Mit der erfindungsgemäßen Maßnahmen nach Haupt- und Hilfsansprüchen wird Abhilfe für die vorgenannt geschilderten Problemstellungen erreicht und die notwendigen Voraussetzungen geschaffen, um allein mit der seriellen Übertragung der Absolut-Messdaten die von der Steuerung geforderten Positions- und Regelungsvorgängen zu erfüllen. Die bezieht sich sowohl auf den direkt mit der Steuerung im Datenaustausch über die serielle Schnittstelle befindliche Absolut-Winkel-/Wegmessgeber, als auch auf der indirekten Absolutmesswert-Übertragung über ein BUS-Koppler im BUS-System.

Die Wirkungsweise der Maßnahmen und Vorkehrungen wird anhand der FigurenBeschreibungen näher erläutert.
- Figur 1: zeigt ein Blockschaltbild mit Absolutmessgeber, BUS-Koppler und Steuerungen, die über serielle Schnittstellen und BUS-Systeme in Datenaustausch stehen.
- Figur 2: zeigt ein Signal-Ablaufdiagramm von Steuerungsbefehlen sowie Messwertübermittlung vom Messgeber in beispielhaften drei Übertragungsmoden (A, B, C).
- Figur 3: zeigt Absolutgebermesswerte mit von Schwelwerten abgeleiteten Impulsfolgen zur elektronischen Kommutierung von Elektromotoren.

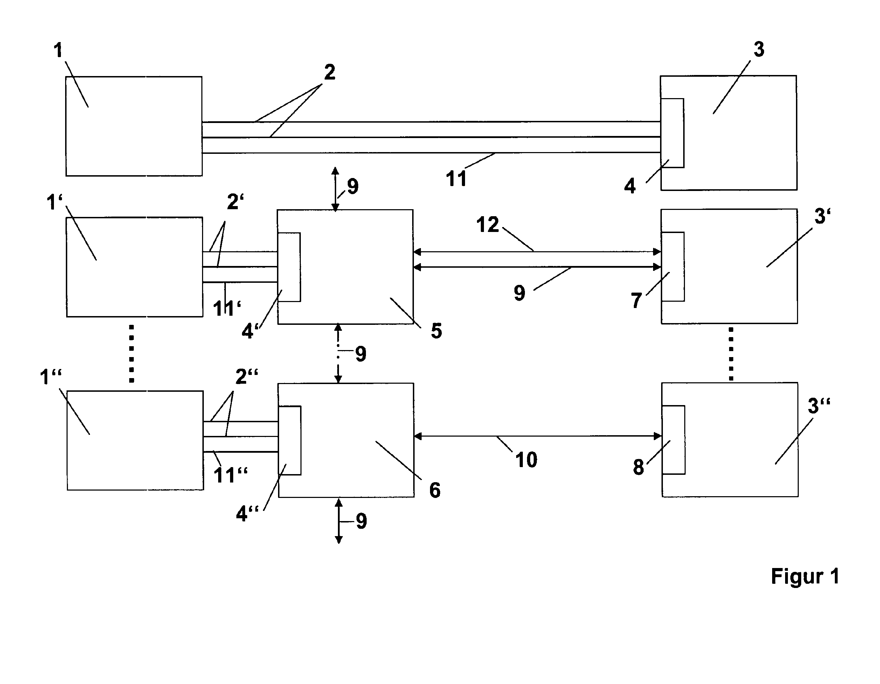

In Figur 1 sind Anordnungen von Messgebern 1, 1', 1" und Steuerungen 3, 3', 3" gezeigt, die in unterschiedlichen Wirkbindungen über serielle Schnittstellen stehen. Sowohl die direkte Verbindung vom Messgeber 1 zur Steuerung 3 über die serielle Schnittstelle 2, als auch die indirekte Verbindungen zwischen Messgeber 1', 1" und Steuerung 3', 3" über BUS-Koppler 5, 6 sowie serielle Schnittstelle 2', 2' und 9, 10. Bei allein diesen Anordnungen findet sich zwischen der seriellen Datenausgabe 2, 2', 2" und Steuerung 3, 3', 3" stets erfinderisch ausgestaltete Empfangseinrichtung für diese Messdaten 4, 4', 4". Bei BUS-Systemen befindet sich zusätzlich zu der im BUS-Koppler befindlichen Empfangseinrichtung 4', 4" noch entsprechend für BUS-Anforderungen ausgestattete Empfangseinrichtungen 7,8. Allen den erfindungsgemäßen Empfangseinrichtungen wird die Aufgabe zuteil, die Messdaten möglichst aktuell und schnell der Steuerung folgerichtig und bedarfsgerecht bereitzustellen. Damit wird die Steuerung erheblich entlastet von zeitkritischen Messdatenabfragen und ihre Leistungsfähigkeit steht praktisch voll für Steuerzwecke zur Verfügung.

Besonders augenfällig werden die Belastungen der Steuerung bei der Regelung von Servomotoren mit Zykluszeiten von ca. 50 ... 100 µsec und der folgerichtig notwendigen elektronischen Kommutierungssignalen. Allein diese Kommutierung erfordert auf die Umdrehung bezogene Erfassung des Winkelabsolutwertes von ca. 1°, was bei 6.000 U/min = 100 Hz einer Messdaten-Abfrage und Übertragung innerhalb ca. 30 µsec bedarf. Bisher konnte man diesen Anforderungen nur durch zusätzliche Maßnahmen gerecht werden, d. h. auf der Geberseite mit Ausgabe von zusätzlichen Inkrementalsignalen und auf der Steuerungsseite, mit aufwendigen Schaltungsmaßnahmen. Vielfach werden noch separate Kommutierungsstellungsgeber eingebaut, die die Absolutlage z. B. mittels drei am Rotorumfang angebrachten Hall-Sensoren erfassen und die der Magnet-Polteilung des Elektromotors entsprechen anzuordnen sind.

Mit den neuen Absolutmessgebern, z. B. mit den in den oben erwähnten Patentschriften ausgeführten Winkel- und Wegmessgeber, werden unter Echtzeit, d. h. mit der Taktfrequenz der Digitallogik von ca. 50 MHz, die Absolutwerte jeweils in ca. 20 nsec erfasst und mit ca. 10 MHz serieller Datenübertragung übertragen. Geht man von einer Datenlänge für Absolutwerte von ca. 18 Bit Singleturn- und ca. 18 Bit Multiturn-Werten aus, was zusammengesetzt ca. 36 Bit ergibt, so sind die Absolutwerte alle 3,6 µsec übertragbar. Die erfindungsgemäße Ausführung der Empfangseinrichtung macht sich diese mögliche schnelle Datenübertragung zu Nutze, in dem sie permanent die Messdaten vom Messgeber abfragt. Die Empfangseinrichtung hat permanent die aktuellen Messwerte vorliegen und kann diese schnellstmöglich und bedarfsgerecht der Steuerung zur Verfügung stellen. Besonders bei BUS-Systemen mit relativ langen Befehlszyklen werden diese von der Steuerung entkoppelte und permanent abgefragte Messdaten durch die Empfangseinrichtung offensichtlich. Jeder BUS-Abfrage stehen somit innerhalb einiger Mikrosekunden aktualisierte Messwerte zur Verfügung.

Hier wird absichtlich auf die Erörterung der vielfältigen Möglichkeiten bei bestehenden BUS-Systemen verzichtet, bei der die Übertragungszeiten von Messdaten zur Steuerung verkürzt, in dem auf die in der erfindungsgemäßen Empfangseinrichtung des BUS-Kopplers bereits vorhandene Messdaten zurückgegriffen werden kann. Von der Gestaltung der BUS-Protokolle bis zu separaten Leitungen bei BUS-Kabeln, für z. B. Synchronisationssignale und Echtzeitsignale bzw. Datenübertragung,werden neue Voraussetzungen geschaffen, um die Messdaten echtzeitgerecht zur Verfügung zu stellen. In der Figur 1 ist zwischen dem BUS-Koppler 5 und der Steuerung 3' parallel zum BUS-Kabel 9 die Sonderleitung 12 aufgeführt, um die echtzeitfähige Ergänzung bei bestehenden BUS-Systemen im Zusammenwirken mit der Empfangseinrichtung 7 zu verdeutlichen. Bei der Darstellung der Verbindung zwischen BUS-Koppler 6 und der Steuerung 3" soll eine abweichende Ausführung der BUS-Leitung bzw. des BUS-Systems 10 zu den sonst herkömmlichen BUS-Verbindungen 9 verdeutlichen, dass die echtzeitfähige Messdatenübertragung im Zusammenwirken mit der Empfangseinrichtung 8 stattfindet.

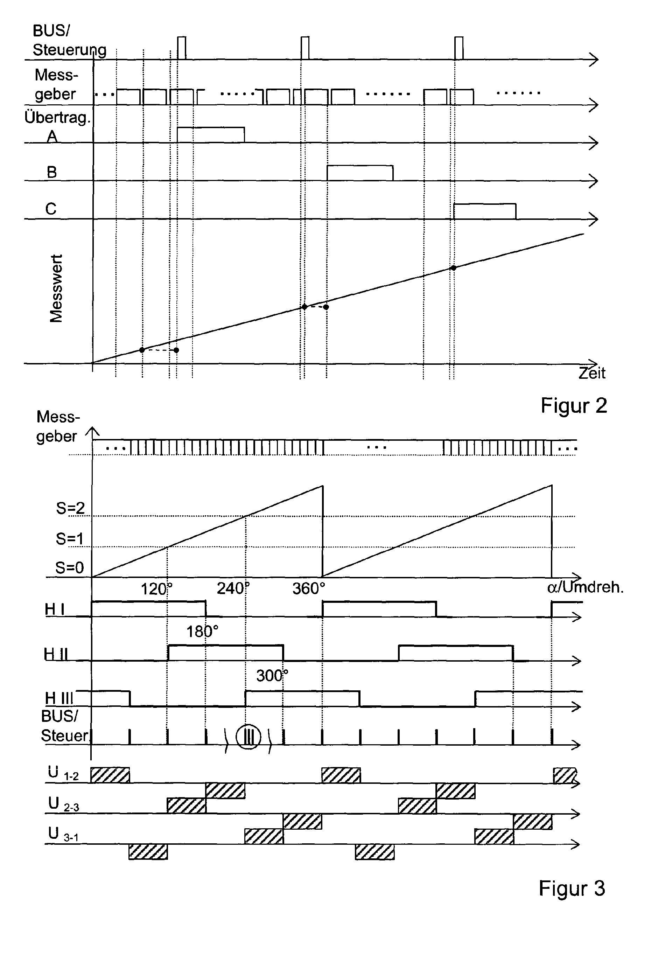

In Figur 2 werden die Vorteile und Gestaltungsmerkmale der Empfangseinrichtung näher erläutert. Es werden drei beispielhafte Messdatenübertragungen A, B, C der Empfangseinrichtung an die Steuerung dargestellt, wobei die Ausführungsmöglichkeiten ausdrücklich nicht auf diese Fälle begrenzt sein sollen. Zusätzlich sind im Zeitablaufdiagramm ein angenommener Messwertverlauf sowie Messwertanforderungen direkt oder über den BUS von der Steuerung angeführt und die seriell permanent übermittelte Messgebersignale an die Empfangseinrichtung dargestellt.

Im Fall A hat die Empfangseinrichtung den vorhergehenden Messwert vorrätig und den neuen Messwert noch nicht vollständig bei der Steuerungsanfrage empfangen. In dem Übertragungsmode A der Messwerte von der Empfangseinrichtung zur Steuerung wird der zuletzt vollständige Messwert sofort auf Abruf der Steuerung bereitgestellt und die Messabweichung zu diesem Zeitpunkt im Messwertdiagramm dargestellt.

Im Fall B hat die Empfangseinrichtung bereits einen Messwert vorrätig und ein neuer wird übertragen. Die Empfangseinrichtung hat im Mode B jedoch die Aufgabe, synchron mit der Abfrage der Steuerung einen zu diesem Zeitpunkt vorliegenden Wert zu erfassen und schnellstmöglich der Steuerung zu übermitteln. Hier wird besonders die in den vorgenannten Patentschriften beschriebene Übertragung mittels SSI-Schnittstelle mit der Messwertabfrage über die Taktflanke und den Absolutmessgebern mit ca. 20 nsec Messwertverarbeitung deutlich.

Im Fall C nimmt die Empfangseinrichtung eine Bewertung der permanent übermittelten Messdaten vor, in dem sie den nächsten Messwert aus den vorangehenden Änderungen ermittelt. Im einfachsten Fall sind hier lineare Interpolationen durch die sehr kurzen Messabstände von einigen Mikrosekunden zulässig, die die Messwertauflösungen vorteilhaft noch erhöhen. In diesem Mode C können somit die sehr nahe dem tatsächlichen Messwert und noch höher aufgelöste Absolutwerte sofort an die Steuerung übermittelt werden. Hier wird besonders ersichtlich, wie die permanent eintreffenden Messdaten vorteilhaft von der Empfangseinrichtung der Steuerung bezüglich Auflösung und schnellstmöglich, d. h. praktisch synchron, übermittelt werden kann. Besonders dort wo die Empfangseinrichtung sehr nahe an der Steuerung angebracht ist, können die Messdaten der Steuerung parallel bereitgestellt werden und damit die unverzügliche Weiterverarbeitung vorteilhaft gewährleisten. Dafür sind die Voraussetzungen in der Anordnung nach Figur 1 über die Empfangseinrichtung 4 und Steuerung für höchste Messwert-Verarbeitungsgeschwindigkeiten gegeben. Auch die Anordnung von dem BUS-Koppler 6 mit Empfangseinrichtung 4" ist dann auch für sehr hohe Messwert-Verarbeitungen vorteilhaft nutzbar, wenn der BUS-Koppler 6 sehr nahe an der Steuerung 3" angebracht ist und mittels eines Parallel-BUSSES 10 die Messdaten übertragbar sind. Ist dagegen der BUS-Koppler 5 entfernt von der Steuerung 3' anzubringen, so bietet sich eine Erweiterung 12 der BUS-Leitungen 9 an, um die sehr schnellen Messsignalerfassungen für mindestens den einen der oben geschilderten Mode-Ausführungen der Empfangseinrichtung zu nutzen.

In Figur 3 wird an einer weiteren Anforderung der Absolut-Messdatenübermittlung verdeutlicht, welche Vorteile die erfindungsgemäß weitere Ausgestaltung der Empfangseinrichtung bietet. Die Darstellung ist selbsterklärend und gibt die Situation des elektronisch zu kommutierenden Elektromotors innerhalb einer Motorumdrehung an Es sind aus den Messabsolutwerden des Messgebers permanent während einer Umdrehung zu entsprechenden Schwellwerten S = 0, S = 1, S = 2, d. h. 0°, 120°, 240°, die präzisen Pulsfolgen H I, H II, H III abzuleiten und direkt oder über die BUS-Leitungen der Steuerung zu übermitteln, um die Motor-Wicklungen U₁₋₂, U₂₋₃ und U₃₋₁ wie angegeben anzusteuern. Die Empfangseinrichtung vergleicht z. B. mit den fest vorgegebenen Winkel-Absolutwerten die permanent eintreffenden Messabsolutwerte vom Messgeber und übermittelt folgerichtig der Steuerung die Kommutierungsbefehle. Bei seriellen BUS-Systemen ist derzeit die Befehlszykluszeit zu lang und erfordert daher noch Zusatzleitungen (Figur 1, 12) oder spezielle BUS-Ausführungen (Figur 1, 10).

Mit der erfindungsgemäß ausgestalteten Empfangseinrichtung, die zweckmäßigerweise auch in ein ASIC integriert werden kann, sind Absolutmessdaten bedarfsgerecht für höchst anspruchsvolle Steuerungsaufgaben vom Messgeber an die Steuerungseinrichtung über serielle Schnittstellen übertragbar. Damit sind effiziente serielle Übertragungen von Absolut-Messdaten durch Zwischenschaltung der Empfangseinrichtung über elektrische, optische oder elektromagnetische Wirkverbindungen vom Messgeber zur Steuerung vorteilhaft gegeben.

### Bezeichnungen

- 1 , 1' , 1 ":: Mess-Systeme
- 2 , 2' , 2":: Serielle Datenschnittstellen
- 3, 3', 3".: Steuerungen
- 4 , 4' , 4":: Serielle Echtzeit-Verarbeitung
- 5:: BUS-Koppler für Messgeber und einheitliches BUS-System
- 6:: BUS-Koppler für Messgeber und mit unterschiedlichen BUS-Systemen
- 7:: BUS-Echtzeit-Verarbeitung
- 8:: BUS bzw. serielle Echtzeit-Verarbeitung
- 9:: Haupt-BUS-System
- 10:: Steuerung mit unterschiedlichem BUS-System bzw. serieller Schnittstelle

## Patentansprüche

1. Messsysteme, insbesondere Winkel- und Wegmesssysteme, mit der Absoluterfassung von Messwerten im Geber und serieller Schnittstelle zur Ausgabe der Gesamtabsolutwerte in binärer Form **dadurch gekennzeichnet, dass** die Messdaten des Gebers permanent über die serielle Datenausgabe an eine nicht zum Messgeber gehörende Empfangseinrichtung erfolgt, dort zwischengespeichert und der Steuerung von dort aus folgerichtig übertragen wird.

2. nach 1.) d. g., dass die Empfangseinrichtung die permanente Messdatenübertragung des Messgebers einleitet.

3. nach 1.) d. g., dass die Steuerung über die Empfangseinrichtung die permanente Messdatenübertragung des Messgebers einleitet.

4. nach 1.) d. g., dass die Empfangseinrichtung die Messwerte bewertet und so an die Steuerung weiterleitet.

5. nach 1.) d. g., dass die Empfangseinrichtung die Messwerte mit vorgegebenen Werten in der Empfangseinrichtung vergleicht und bei Gleichstand über Signale der Steuereinrichtung meldet.

6. nach 1.) d. g., dass die Empfangseinrichtung sich direkt bei der Steuerung befindet.

7. nach 1.) d. g., dass die Empfangseinrichtung sich direkt am BUS-Koppler des BUS-Systems befindet.

8. nach 1.) d. g., dass sich der BUS-Koppler der Empfangseinrichtung direkt bei dem Messgeber befindet.

9. nach 1.) d. g., dass sich der BUS-Koppler mit der Empfangseinrichtung direkt bei der Steuerung befindet.

10. nach 1.) d. g., dass die Empfangseinrichtung in einem integrierten Baustein (A-SIC) realisiert wird.

11. nach 1.) d. g., dass die Empfangseinrichtung die Messdaten seriell und/oder parallel zur Ausgabe an die Steuerung bereitstellt.

12. Verfahren für Messsysteme, insbesondere für Winkel- und Wegmesssysteme, mit serieller Ausgabe von im Messgeber aufbereiteten Gesamtabsolutwerten, **dadurch gekennzeichnet, dass** die Messdaten über eine zwischen dem Messgeber und Steuerung befindlichen Empfangseinrichtung permanent zugeleitet und der Steuerung folgerichtig übermittelt wird.
